# EUROPEAN PATENT APPLICATION

(11) **EP 4 841 733 A1**
(43) Date of publication of application: **18.11.2026**
(21) Application number: 26176016.9
(22) Date of filing: 30.04.2026
(51) Int. Cl.: H01M 10/0525, C01B 25/45, H01M 4/36, H01M 4/58, H01M 4/136, H01M 4/02

(54) **POSITIVE ELECTRODE ACTIVE MATERIALS, METHODS OF PREPARING POSITIVE ELECTRODE ACTIVE MATERIALS, POSITIVE ELECTRODE SLURRIES, AND RECHARGEABLE LITHIUM BATTERIES**

(30) Priority: 14.05.2025 KR 20250062700; 23.04.2026 KR 20260074055
(71) Applicant: SAMSUNG SDI CO., LTD., Yongin-si, Gyeonggi-do 17084 (KR)
(72) Inventor: KIM, Young-Ki, 17084 Yongin-si (KR); KIM, Sangmi, 17084 Yongin-si (KR); DOO, Sungwook, 17084 Yongin-si (KR); KANG, Gwiwoon, 17084 Yongin-si (KR); KANG, Minchul, 17084 Yongin-si (KR); LEE, Soonrewl, 17084 Yongin-si (KR)
(74) Representative: Maiwald GmbH

(57) **Abstract**

A positive electrode active material according to some embodiments of the present disclosure may have a form of secondary particles in which a plurality of primary particles may be agglomerated, the positive electrode active material including a lithium iron phosphate-based compound. The positive electrode active material may have an L value of less than or equal to about 30, an R value of less than or equal to about 70, a G value of less than or equal to about 70, and a B value of less than or equal to about 70 measured by a colorimeter.

## Description

### BACKGROUND

### 1. Field

The present disclosure relates to positive electrode active materials, methods of preparing positive electrode active materials, positive electrode slurries, and rechargeable lithium batteries.

### 2. Description of the Related Art

A portable information device (such as a cell phone, a laptop, or a smart phone) or an electric vehicle has used a rechargeable lithium battery having high energy density as a driving power source. Recently, research has been actively conducted to use a rechargeable lithium battery with high energy density as a driving power source for hybrid or electric vehicles or power storage source.

To achieve large-scale and mass production of rechargeable lithium batteries, the demand for new positive electrode active materials with high performance, safety, and reliability is increasing. Lithium iron phosphate-based positive electrode active materials are attracting attention because they are structurally stable, have high heat resistance, and are abundant in raw materials, making them cost-effective.

However, existing lithium iron phosphate-based positive electrode active materials are inferior in terms of electrical conductivity, energy density, and low-temperature characteristics, and, thus, lithium iron phosphate-based positive electrode active materials require improvement.

### SUMMARY

The present disclosure provides a positive electrode active material, a method of preparing the positive electrode active material, a positive electrode slurry, and a rechargeable lithium battery having improved density characteristics, initial charge/discharge capacity and efficiency characteristics, rate characteristics, low-temperature characteristics, and cycle-life characteristics and having price competitiveness.

A positive electrode active material according to some embodiments of the present disclosure may have a form of secondary particles in which a plurality of primary particles may be agglomerated, the positive electrode active material including a lithium iron phosphate-based compound. The positive electrode active material may have an L value of less than or equal to about 30, an R value of less than or equal to about 70, a G value of less than or equal to about 70, and a B value of less than or equal to about 70 measured by a colorimeter.

In some embodiments, the L value ranges from about 2 to about 30, the R value ranges from about 20 to about 70, the G value ranges from about 45 to about 70, and the B value ranges from about 30 to about 70.

In some embodiments, the lithium iron phosphate-based compound may include a compound represented by Chemical Formula 1, a compound represented by Chemical Formula 2, or a combination thereof. Chemical Formula 1 may be as follows:

[Chemical Formula 1] Liₐ₁Fe₍₁₋ₓ₁₎M¹ₓ₁PO₄,

where 0.9≤a1≤1.5 and 0≤x1≤0.4. M¹ may be Al, Ca, Ce, Cr, Cu, La, Mg, Mn, Mo, Nb, Ni, Sn, Sr, Ti, V, W, Y, Zn, Zr, or a combination thereof. Chemical Formula 2 may be as follows:

[Chemical Formula 2] Liₐ₂Mnₓ₂Fe_{(1-x2-y2)}M²_{y2}PO₄,

where 0.9≤a2≤1.5, 0.1≤x2≤0.9, 0≤y2<0.9, and x2+y2<1. M² may be Al, Ca, Ce, Cr, Cu, La, Mg, Mo, Nb, Ni, Sn, Sr, Ti, V, W, Y, Zn, Zr, or a combination thereof.

In some embodiments, the lithium iron phosphate-based compound may include Al, Mg, Ti, V, or a combination thereof in an amount from about 0.1 mol% to about 0.5 mol% based on a total metal in the lithium iron phosphate-based compound, excluding lithium.

In some embodiments, an average particle diameter of the secondary particles may be from about 3 µm to about 20 µm.

In some embodiments, an arithmetic mean size of the secondary particles may be from about 3 µm to about 20 µm. A standard deviation of the arithmetic mean size of the secondary particles may be less than or equal to about 2.1 µm.

In some embodiments, an arithmetic mean size of the primary particles constituting the secondary particles may be less than or equal to about 200 nm. A standard deviation of the arithmetic mean size of the primary particles may be less than or equal to about 100 nm.

In some embodiments, the secondary particles may include pores, and a porosity, which may be a ratio of an area occupied by pores in a cross-section of the secondary particles to a cross-sectional area of the secondary particles, may be from about 10% to about 50%.

In some embodiments, the positive electrode active material may further include a carbon coating layer on surfaces of the secondary particles. An amount of the carbon coating layer in the positive electrode active material may be from about 1.55 wt% to about 2 wt% based on 100 wt% of the positive electrode active material.

In some embodiments, a pellet density of the positive electrode active material may be from about 2.35 g/cc to about 2.5 g/cc.

A method of preparing a positive electrode active material according to some embodiments of the present disclosure may include mixing an iron phosphate-based precursor, a lithium raw material, and a carbon raw material in a solvent and wet milling the iron phosphate-based precursor, the lithium raw material, and the carbon raw material to prepare a slurry; adding the slurry to a spray dryer and spray drying the slurry to prepare a dried product; firing the dried product to prepare a fired product; and pulverizing the fired product to obtain a positive electrode active material.

In some embodiments, adding the slurry to the spray dryer may include adding the slurry to the spray dryer at an addition speed of less than or equal to about 1 kg/min.

In some embodiments, spray drying the slurry to prepare the dried product may include spray drying the slurry at a temperature from about 150°C to about 400°C.

In some embodiments, pulverizing the fired product to obtain the positive electrode active material may include pulverizing the fired product at a pulverization speed of less than or equal to about 2000 rpm.

In some embodiments, the obtained positive electrode active material may be in a form of secondary particles in which a plurality of primary particles may be agglomerated, the obtained positive electrode active material may comprise a lithium iron phosphate-based compound, and the obtained positive electrode active material may have an L value of less than or equal to about 30, an R value of less than or equal to about 70, a G value of less than or equal to about 70, and a B value of less than or equal to about 70 measured by a colorimeter.

A positive electrode slurry according to some embodiments of the present disclosure may include the positive electrode active material described above; and a solvent, wherein the positive electrode slurry may have a viscosity of less than or equal to about 8000 mPa·s.

A rechargeable lithium battery according to some embodiments of the present disclosure may include a positive electrode, a negative electrode, and an electrolyte. The positive electrode may include a positive electrode current collector and a positive electrode active material layer being disposed on the positive electrode current collector and including the positive electrode active material as described above.

The positive electrode active material according to some embodiments may have price competitiveness and may have improved density characteristics, initial charge/discharge capacity and efficiency characteristics, rate characteristics, low-temperature characteristics, and cycle-life characteristics.

### BRIEF DESCRIPTION OF THE DRAWINGS

FIG. 1 is a schematic perspective view of a portion of a cylindrical rechargeable lithium battery cut away according to some embodiments of the present disclosure.
FIG. 2 is a cross-sectional view of a prismatic rechargeable lithium battery according to some embodiments of the present disclosure.
FIGS. 3 and 4 are each a schematic exploded perspective view of a pouch-type rechargeable lithium battery according to some embodiments of the present disclosure.
FIGS. 5 and 6 are each a scanning electron microscope photograph of a surface of a positive electrode active material according to Example 1.

### DETAILED DESCRIPTION

Hereinafter, specific embodiments will be described in detail so that those of ordinary skill in the art can easily implement them. However, this disclosure may be embodied in many different forms and is not construed as limited to the embodiments set forth herein.

The terminology used herein is used to describe embodiments and is not intended to limit the present invention. The singular expression includes the plural expression unless the context clearly dictates otherwise.

As used herein, "combination thereof" refers to a mixture, a laminate, a composite, a copolymer, an alloy, a blend, or a reaction product of the constituents.

Terms such as "comprises," "includes," or "have" are intended to designate the presence of an embodied feature, number, step, element, or a combination thereof, but those terms do not preclude the possibility of the presence or addition of one or more other features, number, step, element, or a combination thereof.

In the drawings, the thickness of layers, films, panels, or regions are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a geometry formed on the whole surface when viewed from a plan view, but also a geometry formed on a partial surface.

The average particle diameter may be measured, for example, by a particle size analyzer or by a transmission electron microscope image or a scanning electron microscope image. It is also possible to obtain an average particle diameter value by measuring using a dynamic light scattering method, performing data analysis, counting the number of particles for each particle size range, and calculating from this. In the present disclosure, when a definition is not otherwise provided, the average particle diameter D₅₀ may mean a diameter of particles having a cumulative volume of 50 vol% in the particle size distribution, wherein the particles are assumed to be spherical. As used herein, when a definition is not otherwise provided, the average particle diameter refers to a value obtained by measuring the sizes of 20 randomly selected particles from a scanning electron microscope (SEM) image and calculating an arithmetic mean of the sizes of about 20 randomly selected particles, wherein the size of each particle is defined as a diameter in the case of a spherical particle, and as a square root of a product of a major axis length and a minor axis length in the case of a non-spherical particle.

"Or" is not to be construed as an exclusive meaning, for example, "A or B" is construed to include A, B, and A+B.

"Metal" is interpreted as a concept including ordinary metals, transition metals and metalloids (semi-metals). As used herein, the term "metalloid" refers to an element having properties intermediate between those of metals and non-metals. Examples of the metalloid include, but are not limited to, boron (B), silicon (Si), germanium (Ge), arsenic (As), antimony (Sb), and tellurium (Te).

As used herein, the term "primary particle" refers to a minimum unit particle that is recognized as a single particle agglomerate when a positive electrode active material is observed using a scanning electron microscope (SEM), in which a grain boundary is not clearly distinguishable or is not substantially observed. A primary particle is a basic unit constituting a secondary particle formed by aggregation of tens to hundreds of particles, and may exist alone or in a state in which a small number (for example, 20 or less) of primary particles are in contact with each other.

As used herein, the term "secondary particle" refers to an agglomerate of primary particles of a given material, and may also be referred to as an assembly in the present disclosure. A secondary particle has a structure in which the primary particles are combined into a single particle form through interparticle contact and bonding, rather than being simply physically mixed. A secondary particle may be recognized as a single particle form in which a plurality of primary particles are aggregated when observed using a scanning electron microscope (SEM). Such a secondary particle is distinguished from a simple mixture in which respective particles are independently dispersed. A secondary particle may be formed by a spray-drying process, or the like.

### Positive Electrode Active Material

A positive electrode active material according to some embodiments is in a form of secondary particles in which a plurality of primary particles is agglomerated, wherein the positive electrode active material includes a lithium iron phosphate-based compound, the positive electrode active material has an L value of less than or equal to about 30, an R value of less than or equal to about 70, a G value of less than or equal to about 70, and a B value of less than or equal to about 70 measured by a colorimeter. The L value, R value, G value, and B value may be obtained by, for example, using a commercially available general colorimeter to obtain the L, a, and b values in the CIE LAB color coordinates of the positive electrode active material, and then calculating these values using a program such as SpectraMagic. The L value, R value, G value, and B value of the positive electrode active material may be measured in a powder state, and may be determined based on a white point defined under a D65 illuminant in the DCI-P3 color space.

The lithium iron phosphate-based compound that has excellent structural stability, high heat resistance, and price competitiveness is attracting attention. However, the existing lithium iron phosphate-based compound has the problem of inferior electrical conductivity, energy density, and low-temperature characteristics.

Accordingly, the positive electrode active material according to some embodiments can improve capacity characteristics by controlling the secondary particle geometry to suppress primary particle size growth and increase an amount of carbon, and when synthesizing the positive electrode active material in the form of secondary particles, the primary particle may grow to uniform size, thereby improving cycle-life characteristics. These positive electrode active materials have a range of specific colorimetric parameter values, and in the case of positive electrode active materials satisfying the above ranges, high density may be achieved, and capacity characteristics, charge/discharge efficiency, rate characteristics, low-temperature characteristics, and cycle-life characteristics may be improved for the rechargeable lithium battery.

The L value of the positive electrode active material measured by the colorimeter may be less than or equal to about 29, less than or equal to about 28, or less than or equal to about 27 and may be greater than or equal to about 2, greater than or equal to about 5, greater than or equal to about 10, greater than or equal to about 15, greater than or equal to about 20, greater than or equal to about 22, or greater than or equal to about 23, and, for example, may be from about 2 to about 30, from about 5 to about 30, from about 10 to about 30, from about 20 to about 30, or from about 23 to about 27.

The R value of the positive electrode active material measured by the colorimeter may be less than or equal to about 69, less than or equal to about 68, less than or equal to about 67, less than or equal to about 66, or less than or equal to about 65 and may be greater than or equal to about 10, greater than or equal to about 20, greater than or equal to about 30, greater than or equal to about 40, greater than or equal to about 45, greater than or equal to about 50, or greater than or equal to about 55 and, for example, maybe from about 10 to about 70, from about 20 to about 70, from about 30 to about 70, from about 40 to about 70, from about 50 to about 70, or from about 55 to about 65.

The G value of the positive electrode active material measured by the colorimeter may be less than or equal to about 69, less than or equal to about 68, less than or equal to about 67, less than or equal to about 65, less than or equal to about 64, less than or equal to about 63, less than or equal to about 62, or less than or equal to about 61.5 and may be greater than or equal to about 10, greater than or equal to about 20, greater than or equal to about 30, greater than or equal to about 40, greater than or equal to about 45, greater than or equal to about 50, greater than or equal to about 55, greater than or equal to about 56, or greater than or equal to about 57 and, for example, may be from about 40 to about 70, from about 45 to about 65, from about 50 to about 65, from about 55 to about 65, from about 55 to about 63, or from about 57 to about 63.

The B value of the positive electrode active material measured by the colorimeter may be less than or equal to about 69, less than or equal to about 68, less than or equal to about 67, less than or equal to about 65, less than or equal to about 64, less than or equal to about 63, less than or equal to about 62, less than or equal to about 61, less than or equal to about 60, less than or equal to about 59, or less than or equal to about 58 and may be greater than or equal to about 10, greater than or equal to about 20, greater than or equal to about 30, greater than or equal to about 35, greater than or equal to about 40, greater than or equal to about 45, greater than or equal to about 50, greater than or equal to about 51, greater than or equal to about 52, or greater than or equal to about 53 and, for example, may be from about 30 to about 70, from about 30 to about 65, from about 40 to about 65, from about 50 to about 65, from about 50 to about 60, or from about 53 to about 58.

The L value, R value, G value, and B value of the positive electrode active material measured by the colorimeter may be obtained by measuring the L value, the a value, and the b value of the positive electrode active material using a colorimeter through color coordinates in the CIE LAB color space, and calculating the R value, G value, and B value using the L value, the a value, and the b value. When the positive electrode active material has an L value, an R value, a G value, and a B value that satisfy the above ranges, it can have excellent surface characteristics, a high density, and improved capacity characteristics, efficiency, rate characteristics, low-temperature characteristics, and cycle-life characteristics for the rechargeable lithium battery.

The positive electrode active material includes a lithium iron phosphate-based compound. Because the positive electrode active material includes a lithium iron phosphate-based compound, it is possible to secure price competitiveness while also having excellent structural stability and thermal stability.

The lithium iron phosphate-based compound may include, for example a compound represented by Chemical Formula 1, a compound represented by Chemical Formula 2, or a combination thereof. Chemical Formula 1 is as follows:

[Chemical Formula 1] Liₐ₁Fe₍₁₋ₓ₁₎M¹ₓ₁PO4.

In Chemical Formula 1, 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof. Further, 0.90≤a1≤1.5; for example, 0.90≤a1≤1.2, or 0.95≤a1≤1.1. Additionally, 0≤x1≤0.4, 0≤x1≤0.3, 0≤x1≤0.2, 0≤x1≤0.1, or 0.001≤x1≤0.05.

Chemical Formula 2 is as follows:

[Chemical Formula 2] Liₐ₂Mnₓ₂Fe_{(1-x2-y2)}M²_{y2}PO₄.

In Chemical Formula 2, 0.9≤a2≤1.5, 0.1≤x2≤0.9, 0≤y2<0.9, x2+y2<1, and M² is Al, Ca, Ce, Cr, Cu, La, Mg, Mo, Nb, Ni, Sn, Sr, Ti, V, W, Y, Zn, Zr, or a combination thereof. Further, 0.90≤a2≤1.5; for example 0.90≤a2≤1.2, or 0.95≤a2≤1.1. Additionally, 0.1≤x2≤0.9, 0.3≤x2≤0.9, or 0.4≤x2≤0.8 and 0≤y2≤0.4, 0≤y2≤0.3, 0≤y2≤0.2, 0≤y2≤0.1, or 0≤y2≤0.05.

The lithium iron phosphate-based compound may include LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof, but the lithium iron phosphate-based compound is not limited thereto.

The lithium iron phosphate-based compound may include Al, Mg, Ti, V, or a combination thereof as a type of doping element, and the Al, Mg, Ti, V, or the combination thereof may be included in an amount from about 0.1 mol% to about 0.5 mol%, from about 0.1 mol% to about 0.4 mol%, from about 0.1 mol% to about 0.3 mol%, or about 0.2 mol%, based on a total metal, excluding lithium, in which case the rate characteristics and cycle-life characteristics may be improved for the rechargeable lithium battery.

The lithium iron phosphate-based compound may include Ti, Al, or a combination thereof as a doping element, and an amount of Ti may be from about 0.1 mol% to about 0.5 mol%, from about 0.1 mol% to about 0.4 mol%, from about 0.1 mol% to about 0.3 mol%, or about 0.2 mol%, based on a total metal, excluding lithium, and an amount of A1 may be from about 0.1 mol% to about 0.5 mol% based on a total metal, excluding lithium. The rate characteristics and cycle-life characteristics may be improved for the rechargeable lithium battery.

M¹ of Chemical Formula 1 and M² of Chemical Formula 2 may include Al, Mg, Ti, V, or a combination thereof, in which case the cycle-life characteristics of the lithium iron phosphate-based positive electrode active material may be improved for the rechargeable lithium battery. In Chemical Formula 1 and Chemical Formula 2, Al, Mg, Ti, V, or a combination thereof may be included in an amount from about 0.1 mol% to about 0.5 mol%, from about 0.1 mol% to about 0.4 mol%, from about 0.1 mol% to about 0.3 mol%, or about 0.2 mol%, based on a total metal, excluding lithium, and the cycle-life characteristics of the lithium iron phosphate-based positive electrode active material may be improved. In Chemical Formula 1, 0.001≤x1≤0.005, 0.001≤x1≤0.004, 0.001≤x1≤0.003, or x1=0.002 may be satisfied, and in Chemical Formula 2, 0.001≤x2≤0.005, 0.001≤x2≤0.004, 0.001≤x2≤0.003, or x2=0.002 may be satisfied. Accordingly, the cycle-life characteristics of the lithium iron phosphate-based positive electrode active material may be improved for the rechargeable lithium battery.

The positive electrode active material has a secondary particle form in which a plurality of primary particles is agglomerated. The secondary particles may have a spherical or ellipsoidal geometry as the primary particles are closely agglomerated with each other. The secondary particles may be expressed as an assembly. An average particle diameter of the secondary particles may be, for example, from about 3 µm to about 20 µm, from about 5 µm to about 18 µm, from about 5 µm to about 15 µm, from about 5 µm to about 12 µm, from about 5 µm to about 10 µm, from about 5 µm to about 9 µm, or from about 7 µm to about 9 µm. The average particle diameter of the secondary particles may be obtained by randomly selecting 20 secondary particles from an electron microscope image of a positive electrode active material, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle.

According to some embodiments, the positive electrode active material may have secondary particles of uniform size, and the primary particles constituting the secondary particles may be small and uniform in size. Accordingly, the positive electrode active material has high charge/discharge capacity and excellent cycle-life characteristics.

The arithmetic mean size of the secondary particles measured by SEM images of the surface of the positive electrode active material may be from about 3 µm to about 20 µm, from about 5 µm to about 18 µm, from about 5 µm to about 15 µm, from about 5 µm to about 12 µm, from about 5 µm to about 10 µm, from about 5 µm to about 9 µm, or from about 7 µm to about 9 µm. The standard deviation of the arithmetic mean size of the secondary particles may be less than or equal to about 2.1 µm, less than or equal to about 2.05 µm, less than or equal to about 2 µm, less than or equal to about 1.95 µm, or less than or equal to about 1.9 µm and may be greater than or equal to about 0 µm, greater than or equal to about 0.5 µm, greater than or equal to about 1 µm, greater than or equal to about 1.5 µm, greater than or equal to about 1.7 µm, greater than or equal to about 1.9 µm, greater than or equal to about 1.95 µm, or greater than or equal to about 2 µm. In addition, as measured by SEM images, the arithmetic mean size of the primary particles constituting the secondary particles may be less than or equal to about 200 nm or may be from about 10 nm to about 200 nm, from about 50 nm to about 200 nm, from about 60 nm to about 150 nm, from about 70 nm to about 140 nm, from about 80 nm to about 12 0 nm, or from about 100 nm. The standard deviation of the arithmetic mean size of the primary particles may be less than or equal to about 100 nm, less than or equal to about 50 nm, or less than or equal to about 30 nm and may be greater than or equal to about 5 nm, greater than or equal to about 10 nm, greater than or equal to about 12 nm, greater than or equal to about 15 nm, greater than or equal to about 18 nm, greater than or equal to about 20 nm, greater than or equal to about 22 nm, or greater than or equal to about 24 nm. The arithmetic mean size and its standard deviation of the secondary particles may be obtained by measuring the size of 20 random secondary particles in an SEM image or TEM image of the surface of the positive electrode active material, and calculating the arithmetic mean value and its standard deviation value, wherein the size of each particle is defined as a diameter in the case of a spherical particle, and as a square root of a product of a major axis length and a minor axis length in the case of a non-spherical particle. The arithmetic mean size and its standard deviation of the primary particles may be obtained by measuring the size of 20 random primary particles in the SEM image of the surface of the secondary particles, and calculating the arithmetic mean value and its standard deviation value, wherein the size of each particle is defined as a diameter in the case of a spherical particle, and as a square root of a product of a major axis length and a minor axis length in the case of a non-spherical particle. When the arithmetic mean size and standard deviation of the secondary particles and primary particles each satisfy the above ranges, the positive electrode active material has high uniformity in the size of the secondary particles and the size of the primary particles, thereby improving the pellet density of the positive electrode active material and enabling the rechargeable lithium battery to exhibit high initial charge/discharge capacity and excellent cycle-life characteristics.

The secondary particles may include pores, and the porosity, which is the ratio of the area occupied by the pores to the cross-sectional area of the secondary particles, may be from about 10% to about 50%, for example, from about 10% to about 40%, from about 10% to about 30%, from about 20% to about 30%, or from about 25% to about 30%. The porosity may mean a ratio of the area occupied by pores in the cross-sectional area of the secondary particles to the cross-sectional area of the secondary particles. The porosity may be, for example, obtained by cutting a positive electrode active material particle using a focused ion beam (FIB) to obtain a cross-section, and measuring a ratio of the area occupied by the pores within the cross-section of the secondary particles to the cross-sectional area of the secondary particles using an image analysis program such as Image J from a scanning electron microscope image of the cross-section. A cross-section of the secondary particles may be obtained by cutting the secondary particles using a focused ion beam (FIB). An image from a scanning electron microscope (SEM) may be acquired, for example, at a magnification of 5,000× to 50,000× under the same imaging conditions. Image analysis may be performed using a fixed threshold value or a consistent threshold-setting method applied equally to all samples. The porosity of the secondary particles may be an average value of porosities measured with respect to a plurality of secondary particles, and may be, for example, obtained by measuring the porosity of at least 20 individual secondary particles and calculating an average value of the porosity at least 20 individual secondary particles. If the porosity within the secondary particles satisfies the above ranges, the primary particles may be filled between the pores within the secondary particles during positive electrode compressing, thereby improving the pellet density or positive electrode density, and thereby improving the capacity characteristics and energy density of the rechargeable lithium battery.

The positive electrode active material may further include a carbon coating layer on the surface of the secondary particles, a surface of the primary particles constituting the secondary particles, or surfaces of both. The carbon coating layer may improve electrical conductivity of the positive electrode active material and may reduce the resistance of the positive electrode.

The carbon coating layer may include amorphous carbon and may be formed using, for example, glucose, sucrose, lactose, starch, oligosaccharide, polyoligosaccharide, fructose, cellulose, poly(furfuryl alcohol), polyethylene glycol, a block copolymer of ethylene and ethylene oxide, a vinyl-based resin, a cellulose-based resin, a phenolic resin, a pitch-based resin, a tar-based resin, or a combination thereof.

The carbon coating layer may be formed by placing the carbon raw material on the surface of the positive electrode active material particles and then performing a firing process. The carbon raw material and the primary particles may be mixed and fired to form a carbon coating layer on the surface of the primary particles, and then secondary particles in which the primary particles are agglomerated may be prepared through a post-process, or the carbon raw material and the secondary particles may be mixed and fired to form a carbon coating layer on the surface of the secondary particles.

The amount of the carbon coating layer may be greater than or equal to about 1.55 wt%, for example, greater than or equal to about 1.6 wt%, greater than or equal to about 1.65 wt%, greater than or equal to about 1.7 wt%, greater than or equal to about 1.75 wt%, or greater than or equal to about 1.8 wt%, based on 100 wt% of the positive electrode active material, and the upper limit of the amount of the carbon coating layer is not specifically limited but may be, for example, less than or equal to about 2 wt%. The amount of the carbon coating layer may be from about 1.55 wt% to about 2 wt%, from about 1.6 wt% to about 2 wt%, from about 1.65 wt% to about 2 wt%, from about 1.7 wt% to about 2 wt%, from about 1.75 wt% to about 2 wt%, or from about 1.8 wt% to about 2 wt% based on 100 wt% of the positive electrode active material. The amount of the carbon coating layer may be analyzed by, for example, completely combusting the positive electrode active material at a high temperature from about 1200°C to about 1400°C and in an oxygen atmosphere to convert carbon and sulfur in the positive electrode active material into CO₂ (or CO) and SO₂ forms, respectively. The positive electrode active material is in the form of secondary particles in the assembly form in which primary particles are agglomerated, and the secondary particles and the primary particles constituting them grow uniformly, so that a contact area due to an external atmosphere during the firing process is reduced, and, thus, the carbon loss is reduced, and, thus, the carbon coating amount may be increased compared to the existing lithium iron phosphate-based compound in the form of single particles.

A pellet density of the positive electrode active material may be greater than or equal to about 2.1 g/cc and may be from about 2.1 g/cc to about 2.6 g/cc, from about 2.35 g/cc to about 2.5 g/cc, from about 2.35 g/cc to about 2.46 g/cc, or from about 2.43 g/cc to about 2.46 g/cc. The pellet density of the positive electrode active material may be measured by placing 3 g of the positive electrode active material in a mold, maintaining the positive electrode active material in the mold at 4 tons for 30 seconds at a temperature of 25°C, measuring the thickness of the pellet, calculating the pellet volume using the thickness of the pellet and the diameter of the mold, and dividing the mass of the positive electrode active material by the calculated volume. If the pellet density of the positive electrode active material satisfies the above ranges, the powder characteristics may be improved, thereby improving the capacity characteristics. The pellet density of the positive electrode active material may be improved when the porosity within the secondary particles of the positive electrode active material satisfies the above ranges, so that the primary particles fill the pores during compression.

### Method of Preparing Positive Electrode Active Material

A method of preparing a positive electrode active material according to some embodiments includes: mixing an iron phosphate-based precursor, a lithium raw material, and a carbon raw material in a solvent and wet milling them to prepare a slurry; adding the wet milled slurry to a spray dryer and spray drying the wet milled slurry to prepare a dried product; firing the dried product to prepare a fired product; and pulverizing the fired product to obtain a positive electrode active material.

A positive electrode active material including a lithium iron phosphate-based compound may be prepared mainly by a liquid-phase method and a solid-phase method. The liquid-phase method refers to a method of preparing a lithium iron phosphate-based compound through chemical reactions in a solution phase, such as hydrothermal synthesis, sol-gel method, and co-precipitation method. In general, the lithium iron phosphate-based compound prepared by the liquid-phase method may have advantages such as a complete crystal structure, absence of impurity peaks, uniform particle size, and uniform carbon coating on the particle surface. However, the liquid-phase method has problems such as a complicated preparing process, high consumption of lithium raw materials, high cost, and low reaction temperature for preparing lithium iron phosphate that easily causes antisite defects in the material lattice, and it is difficult to prepare the final product in the form of secondary particles or in an assembly form in which a plurality of primary particles is agglomerated, such as the positive electrode active material according to some embodiments. Another disadvantage is that the preparing process does not include a spray drying process, making it impossible to synthesize materials in the form of secondary particles.

However, the positive electrode active material according to some embodiments is prepared by a type of solid-phase method of reacting raw materials in a solid state, and by applying the aforementioned preparing method, it has a form of secondary particles in which a plurality of primary particles is agglomerated and may satisfy the ranges of the aforementioned colorimetric parameters, and the primary particles grow to a uniform size and the size of the secondary particles may also be controlled to be uniform.

### Preparing Slurry

The method of preparing a positive electrode active material may include a process of mixing an iron phosphate-based precursor, a lithium raw material, and a carbon raw material in a solvent and wet milling the iron phosphate-based precursor, the lithium raw material, and the carbon raw material in the solvent to prepare a slurry. The preparing of the slurry may include mixing an iron phosphate-based precursor and a lithium raw material to prepare a raw material mixture, preparing a carbon raw material, mixing the raw material mixture and the carbon raw material, adding a solvent, and performing wet milling to prepare a slurry. A mixing weight ratio of the raw material mixture and the carbon raw material is not specifically limited but may be, for example, from about 5:5 to about 99:1, from about 6:4 to about 99:1, from about 7:3 to about 99:1, from about 8:2 to about 99:1, or from about 9:1 to about 99:1.

The iron phosphate-based precursor may be an iron phosphate precursor such as iron phosphate (FePO₄) and iron(II) phosphate (Fe₃(PO₄)₂), one formed by adding a phosphorus raw material such as phosphoric acid (H₃PO₄), ammonium dihydrogen phosphate (NH₄H₂PO₄), diammonium hydrogen phosphate ((NH₄)₂HPO₄), or trisodium phosphate (Na₃PO₄) to an iron raw material such as iron trioxide (Fe₂O₃), iron oxalate (FeC₂O₄), or iron hydroxide (Fe(OH)₃) or may be an iron manganese phosphate precursor formed by further adding a manganese raw material such as manganese oxide, manganese carbonate, manganese sulfate, or manganese nitrate to the iron phosphate precursor. The iron phosphate-based precursor may be used without limitation as long as the iron phosphate-based precursor is a known material used in solid-phase reaction.

The lithium raw material may be, for example, Li₂CO₃, LiOH, a hydrate thereof, a hydride thereof, or a combination thereof.

The carbon raw material may include glucose, sucrose, lactose, starch, oligosaccharide, polyoligosaccharide, fructose, cellulose, poly(furfuryl alcohol), polyethylene glycol, a block copolymer of ethylene and ethylene oxide, a vinyl-based resin, a cellulose-based resin, a phenolic resin, a pitch-based resin, a tar-based resin, or a combination thereof. For example, as the carbon raw material, a mixture of glucose and polyethylene glycol may be used, and a mixing weight ratio is not specifically limited but may be, for example, from about 10:90 to about 90:10, from about 20:80 to about 80:20, from about 30:70 to about 70:30, or from about 40:60 to about 60:40 or about 50:50.

The wet milling is performed by adding and mixing a solvent and any one of ethylene glycol (EG), diethylene glycol (DEG), triethylene glycol (TEG), tetraethylene glycol (TetraEG), propylene glycol (PG), polyethylene glycol (PEG), polypropylene glycol (PPG), ethanol, water, and acetone may be used as the solvent. Alternatively, a polyol solvent that induces a reducing atmosphere may be used alone or in a mixed solvent with water, acetone, or ethanol.

The wet milling may be performed using bead mill, ball mill, vibration mill, or colloid mill equipment. In some embodiments, the wet milling may be performed using a ball milling method with zirconia balls, wherein the wet milling may be conducted by rotating a milling container at a rotational speed of from about 50 rpm to about 2000 rpm for about 1 hour to about 10 hours.

**In** the preparing of the slurry by wet milling, a raw material including Al, Ca, Ce, Cr, Cu, La, Mg, Mn, Mo, Nb, Ni, Sn, Sr, Ti, V, W, Y, Zn, Zr, or a combination thereof may be further added to the slurry. A raw material including Al, Mg, Mn, Ti, V, or a combination thereof may be added. The raw material including Al, Mg, Ti, V, or the combination thereof as a type of doping element may be further added, and the Al, Mg, Ti, V, or the combination thereof may be added in an amount from about 0.1 mol% to about 0.5 mol%, from about 0.1 mol% to about 0.4 mol%, from about 0.1 mol% to about 0.3 mol%, or about 0.2 mol%, based on a total metal, excluding lithium, in the lithium iron phosphate-based compound of the final positive electrode active material. A raw material containing Ti may be further added to the slurry, and an amount of Ti may be added to be from about 0.1 mol% to about 0.5 mol%, from about 0.1 mol% to about 0.4 mol%, from about 0.1 mol% to about 0.3 mol%, or about 0.2 mol%, based on a total metal, excluding lithium, in the final positive electrode active material. Accordingly, the rate characteristics and cycle-life characteristics may be improved for the rechargeable lithium battery.

### Preparing Dried Product

The method of preparing a positive electrode active material may include a process of adding the wet milled slurry to a spray dryer and spray drying the wet milled slurry to prepare a dried product.

The wet-milled slurry may be injected into a spray dryer and sprayed to generate droplets containing a uniform desired composition, and then the formed droplets may be dried to produce a dried product.

The spray dryer may include an ultrasonic spray device, a one- and two-fluid air nozzle spray device, an ultrasonic nozzle spray device, a filter expansion droplet generator (FEAG), and a disk-type droplet generator, or any known spray dryer may be used without limitation. The spray dryer may use a two-fluid air nozzle spray device.

An amount of the slurry added may vary depending on the spray dryer but may be appropriately adjusted. For example, at a blower speed of about 50 Hz and an addition pressure of about 0.5 MPa, an addition speed of the slurry may be less than or equal to about 1 kg/min, for example, less than about 1 kg/min, less than or equal to about 0.9 kg/min, less than or equal to about 0.8 kg/min, less than or equal to about 0.7 kg/min, less than or equal to about 0.6 kg/min, or less than or equal to about 0.5 kg/min, and greater than or equal to about 0.01 kg/min, greater than or equal to about 0.05 kg/min, greater than or equal to about 0.1 kg/min, greater than or equal to about 0.15 kg/min, greater than or equal to about 0.2 kg/min, greater than or equal to about 0.3 kg/min, or greater than or equal to about 0.4 kg/min. The addition speed of the slurry is a value converted on a solid content basis, and is defined as an amount of the slurry supplied per minute (min) based on a mass of solid content in the slurry. When the addition speed of the slurry added to the spray dryer satisfies the above ranges, secondary particles composed of primary particles of uniform size may be produced, and the average size of the primary particles may be adjusted to be less than or equal to about 200 nm, a size of the secondary particles may also be uniformly controlled, and a positive electrode active material exhibiting the aforementioned colorimetric values may be prepared.

The spray drying may be performed at a temperature of greater than or equal to about 100°C, for example, at a temperature from about 150°C to about 400°C, from about 150°C to about 300°C, from about 200°C to about 300°C, or from about 200°C to about 250°C for drying the components and evaporating the solvent.

### Preparing Fired Product

The method of preparing a positive electrode active material may include a process of preparing a fired product, which may be achieved by firing the dried product.

Firing may be performed under vacuum or inert gas and at a temperature from about 700°C to about 1000°C, for example, from about 725°C to about 900°C or from about 750°C to about 800°C. The inert gas may be argon or nitrogen. The fired product may be in the form of secondary particles in which a plurality of primary particles including a lithium iron phosphate-based compound is agglomerated, and the secondary particles may not be uniform (e.g., in size) compared to the obtained positive electrode active material described later, but the characteristics of the primary particles included in the fired product and the primary particles included in the positive electrode active material described later may be the same.

### Obtaining Positive Electrode Active Material

The method of preparing a positive electrode active material may include a process of pulverizing the fired product to obtain a positive electrode active material. The secondary particles of the fired product may be made uniform (e.g., in size) by the above pulverizing.

The pulverizing may be performed using equipment such as a jet mill, a ball mill, a bead mill, or a sand mill, and known devices may be used without limitation.

During the above pulverizing, the pulverization may be performed under relatively mild conditions to make the secondary particles of the fired product uniform (e.g., in size). For example, the pulverizing may be performed at a pulverization speed of less than or equal to about 2000 rpm, for example, less than or equal to about 1900 rpm, less than or equal to about 1800 rpm, less than or equal to about 1700 rpm, less than or equal to about 1600 rpm, or less than or equal to about 1500 rpm, and greater than or equal to about 100 rpm, greater than or equal to about 300 rpm, greater than or equal to about 500 rpm, greater than or equal to about 700 rpm, greater than or equal to about 900 rpm, greater than or equal to about 1000 rpm, greater than or equal to about 1200 rpm, or greater than or equal to about 1400 rpm. The pulverizing may be performed at a pulverization speed of, for example, from about 100 rpm to about 2000 rpm, from about 500 rpm to about 2000 rpm, or from about 1000 rpm to about 2000 rpm. If the pulverization speed satisfies the above ranges during the pulverizing, the positive electrode active material in the form of secondary particles in which a plurality of primary particles is agglomerated may be obtained through the pulverizing, and a positive electrode active material in which the secondary particles have a uniform particle size may be obtained. If the pulverization speed is greater than about 2000 rpm, the secondary particles may be pulverized and separated in the form of nanoparticles rather than forming an assembly in the form of secondary particles in which a plurality of the primary particles are agglomerated, and, thus, the colorimetric parameter values of the positive electrode active material described below may not be satisfied, and even if the same amount of carbon raw material is added, the amount of carbon remaining in the final positive electrode active material may be reduced.

The obtained positive electrode active material may be in the form of secondary particles in which a plurality of primary particles is agglomerated, the obtained positive electrode active material may comprise a lithium iron phosphate-based compound, and the obtained positive electrode active material may have an L value of less than or equal to about 30, an R value of less than or equal to about 70, a G value of less than or equal to about 70, and a B value of less than or equal to about 70 measured by a colorimeter. The secondary particles may become more uniform depending on the pulverization process. In the obtained positive electrode active material, an average particle diameter of the secondary particles may be from about 3 µm to about 20 µm. The obtained positive electrode active material may be described in the same manner as the aforementioned positive electrode active material, and a description of the obtained positive electrode active material is therefore omitted below.

The positive electrode active material obtained by the preparing method described above may secure a rechargeable lithium battery having price competitiveness and having improved density characteristics, initial charge/discharge capacity and efficiency characteristics, rate characteristics, low-temperature characteristics, and cycle-life characteristics.

### Positive electrode slurry

Some embodiments provide a positive electrode slurry including the aforementioned positive electrode active material and a solvent, wherein the positive electrode slurry has a viscosity of less than or equal to about 8000 mPa·s. The positive electrode slurry may be prepared by dispersing the positive electrode active material in a solvent, although the preparation method is not limited thereto.

The viscosity of the aforementioned positive electrode slurry may be, for example, less than or equal to about 7,500 mPa·s, less than or equal to about 7,000 mPa·s, less than or equal to about 6,500 mPa·s, less than or equal to about 6,000 mPa·s, less than or equal to about 5,500 mPa·s, less than or equal to about 5,000 mPa·s, or less than or equal to about 4,500 mPa·s, and may be greater than or equal to about 1,000 mPa·s, greater than or equal to about 2,000 mPa·s, greater than or equal to about 3,000 mPa·s, or greater than or equal to about 3,500 mPa·s. The viscosity of the positive electrode slurry may be about 1000 mPa·s to about 8000 mPa·s, about 2000 mPa·s to about 7000 mPa·s, about 3000 mPa·s to about 6000 mPa·s, about 3000 mPa·s to about 5000 mPa·s, or about 3500 mPa·s to about 4500 mPa·s. The viscosity of the positive electrode slurry may be measured at 25°C using a Brookfield rotational viscometer at 20 rpm under a sample amount of 3 g. If the viscosity of the positive electrode slurry satisfies the above ranges, the coating process may be more efficient, and the stability and consistency of the process may be improved. Because the positive electrode active material may be described in the same manner as described above, a description of the positive electrode active material is omitted below.

N-methylpyrrolidone (NMP), acetone, or water may be used as the solvent, but the solvent is not necessarily limited thereto. Known solvents may be used as the solvent.

The positive electrode slurry may optionally further include a binder, a conductive material, or a combination thereof in addition to the positive electrode active material. Specific details for the binder and the conductive material are described below for the positive electrode active material layer.

### Rechargeable Lithium Battery

A rechargeable lithium battery according to some embodiments includes a positive electrode including a positive electrode current collector, and a positive electrode active material layer disposed on the positive electrode current collector and including the aforementioned positive electrode active material; a negative electrode; and an electrolyte. The rechargeable lithium battery may include a positive electrode, a negative electrode, a separator between the positive electrode and the negative electrode, and an electrolyte.

The rechargeable lithium battery according to some embodiments may have improved battery performance overall by including the positive electrode including the aforementioned positive electrode active material, and specifically, may have improved low-temperature capacity and cycle-life characteristics.

The above rechargeable lithium battery may have an improved low-temperature capacity such that the discharge capacity at a low temperature (e.g., about -20°C) is greater than or equal to about 80 mAh/g. The discharge capacity at low temperature of the rechargeable lithium battery may be greater than or equal to about 85 mAh/g, greater than or equal to about 90 mAh/g, or greater than or equal to about 95 mAh/g. The low-temperature discharge capacity of the rechargeable lithium battery may refer to the ratio of the initial discharge capacity of the battery to the weight of the positive electrode active material and may be measured according to the method described in the Examples below.

In addition, when the rechargeable lithium battery is subjected to an initial charge/discharge cycle of charging at 0.2 C-rate and discharging at 0.2 C-rate, and then the cycle of charging at 1 C-rate and discharging at 1 C-rate is repeated 50 times or more, and the ratio (cycle-life) of the 50^{th} cycle discharge capacity to the initial discharge capacity is calculated according to the following Equation 2, the cycle-life of the rechargeable lithium battery may be improved to 98% or more, indicating that the cycle-life characteristics are improved for the rechargeable lithium battery. The cycle-life of the rechargeable lithium battery may be greater than or equal to about 98.5%, greater than or equal to about 98.7%, greater than or equal to about 98.9%, greater than or equal to about 99%, or greater than or equal to about 99.5%. [Equation 2] 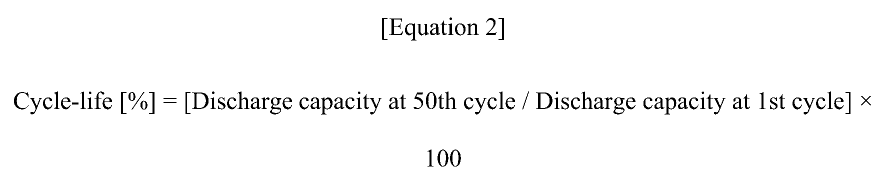 Cycle-life [%] = [Discharge capacity at 50th cycle / Discharge capacity at 1st cycle] × 100

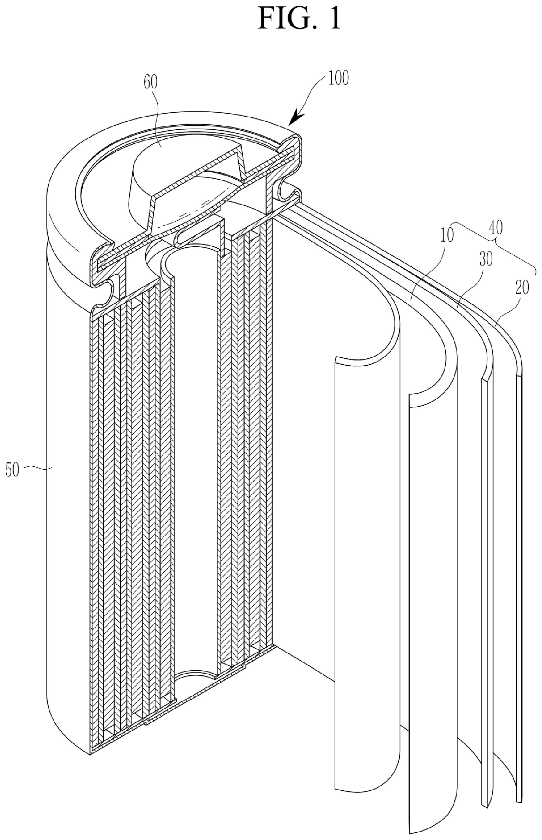

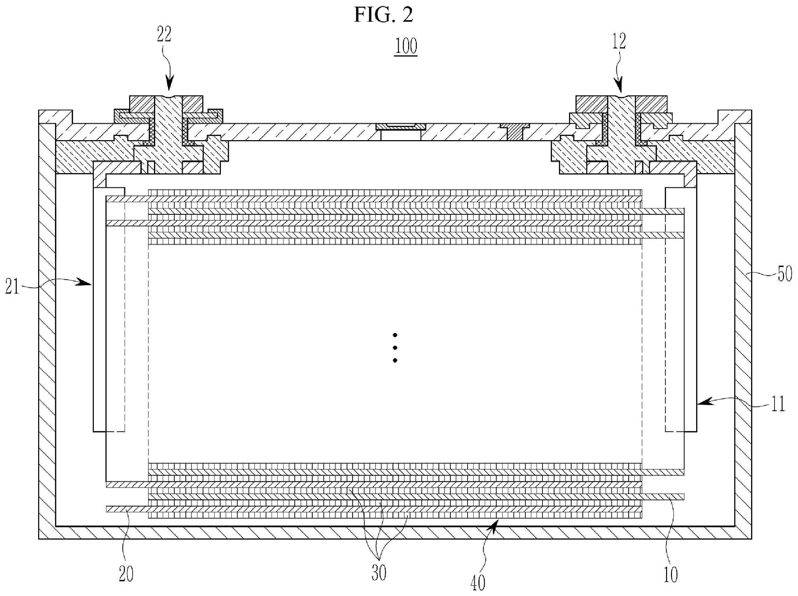

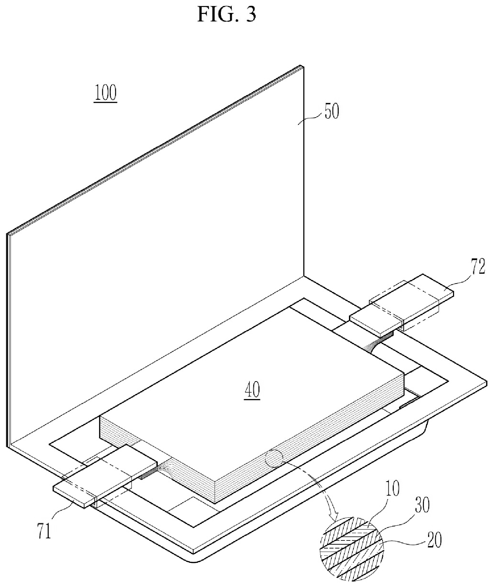

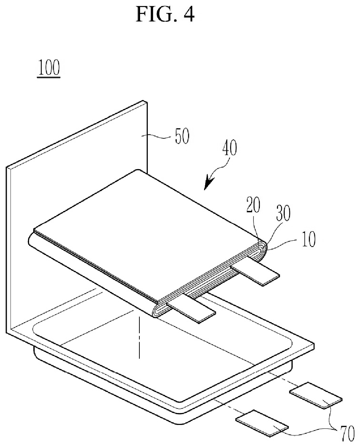

The rechargeable lithium battery may be classified into geometries of a cylinder, a prism, a pouch, or a coin. FIG. 1 is a schematic view of a cylindrical rechargeable lithium battery cut along a vertical axis and an electrode assembly 40 extending from the cylindrical rechargeable lithium battery according to some embodiments of the present disclosure. FIG. 2 is a cross-sectional view of a prismatic rechargeable lithium battery according to some embodiments of the present disclosure. FIGS. 3 and 4 are each a schematic exploded perspective view of a pouch-type rechargeable lithium battery. The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown).

The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. The rechargeable lithium battery 100 may include an electrode tab 70 that serves as an electrical path for conducting current formed in an electrode assembly 40 to the outside. The electrode tab 70 may be disposed in the same direction as in FIG. 4, or the positive electrode tab 71 and the negative electrode tab 72 may be disposed in opposite directions as in FIG. 3.

### Positive Electrode

The positive electrode includes a positive electrode current collector; and a positive electrode active material layer disposed on the positive electrode current collector and including the aforementioned positive electrode active material. According to some embodiments, the positive electrode may secure price competitiveness by including the aforementioned positive electrode active material and may have improved density characteristics, initial charge/discharge capacity and efficiency characteristics, rate characteristics, low-temperature characteristics, and cycle-life characteristics.

The positive electrode current collector is not particularly limited as long as the positive electrode current collector has conductivity and does not cause an undesirable chemical change in the rechargeable lithium battery and may be an aluminum foil or a stainless-steel foil having a thickness from about 10 µm to about 15 µm.

The positive electrode active material layer includes the aforementioned positive electrode active material. Specific details of the positive electrode active material may be described in the same manner as described above, and those details of the positive electrode active material are therefore omitted below.

An amount of the positive electrode active material may be from about 60 wt% to about 99.9 wt%, from about 70 wt% to about 99.8 wt%, from about 80 wt% to about 99 wt%, or from about 90 wt% to about 98 wt% based on 100 wt% of the positive electrode active material layer.

The positive electrode active material layer may optionally further include a binder, a conductive material, or a combination thereof.

The binder may serve to adhere the positive electrode active material particles well to each other and also to adhere the positive electrode active material well to the positive current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, or nylon, but the binder is not limited thereto.

The conductive material is included to provide electrode conductivity, and any electrically conductive material may be used as a conductive material unless the electrically conductive material causes an undesirable chemical change in a battery. Examples of the conductive material may include a carbon-based material such as natural graphite, artificial graphite, carbon black, acetylene black, Ketjen black, a carbon fiber, a carbon nanofiber, or a carbon nanotube; a metal-based material of a metal powder or a metal fiber including copper, nickel, aluminum, or silver; a conductive polymer such as a polyphenylene derivative; or a mixture thereof.

In the positive electrode active material layer, an amount of the binder may be from about 0.1 wt% to about 5 wt% based on 100 wt% of the positive electrode active material layer, and an amount of the conductive material may be from about 0.1 wt% to about 5 wt% based on 100 wt% of the positive electrode active material layer.

The positive electrode active material layer may further include other positive electrode active materials within a range that does not impede the purpose of the present disclosure in addition to the aforementioned components or may further include an irreversible positive electrode additive.

In addition to the aforementioned positive electrode active material, the positive electrode active material layer may further include a positive electrode active material having a form of primary particles and including the aforementioned lithium iron phosphate-based compound. Herein, the positive electrode active material including the lithium iron phosphate-based compound in the form of primary particles may be primary particles of the lithium iron phosphate-based compound that are not assembled and remain separated within the composite positive electrode active material, and the arithmetic mean size of the primary particles is as described above and will not be repeated herein. The positive electrode active material including the aforementioned lithium iron phosphate-based compound in the form of primary particles means that it does not exist in the form of an assembly by agglomerating with the above-mentioned positive electrode active material but, rather, exists in a non-agglomerated state by being separated from each other.

When the positive electrode active material including the lithium iron phos phate-based compound having the form of primary particles is further included, a weight ratio of the aforementioned positive electrode active material having a form of secondary particles to the positive electrode active material including the lithium iron phosphate-based compound having the primary particle form may be about 1:9 to about 9:1 and may be appropriately added depending on the purpose. The positive electrode active material including a lithium iron phosphate-based compound having the form of primary particles may further include the aforementioned carbon coating layer on the surface of the primary particle, and since the specific details of the carbon coating layer are as described above, they are omitted below.

The irreversible positive electrode additive refers to a compound that acts as a sacrificial positive electrode that can compensate for the conversion to irreversible Li that no longer participates in the charge/discharge reaction by participating in the formation of a SEI (solid electrolyte interface) film on the negative electrode surface during charge/discharge. The irreversible positive electrode additive is a compound that can be decomposed during the formation process to provide Li and does not participate in the subsequent charge/discharge process. By adding such an irreversible positive electrode additive, the consumed lithium may be replenished, thereby compensating for lithium loss and improving the energy density, cycle-life, and stability of the rechargeable lithium battery.

The irreversible positive electrode additive may include a lithium iron-based oxide, a lithium cobalt-based oxide, a lithium nickel-based oxide, or a combination thereof.

The lithium iron-based oxide may be Li₅FeO₄, LiFeO₂, LiFe₅O₈, or a combination thereof, and among these, using Li₅FeO₄ may provide a lot of lithium in the formation process, which may greatly compensate for irreversible lithium and, thus, may greatly obtain the effect of the irreversible positive electrode additive.

The lithium cobalt-based oxide may be Li₆CoO₄, and the use of Li₆CoO₄ may provide a lot of lithium in the formation process, which can greatly compensate for the irreversible lithium and may, thus, greatly obtain the effect of the irreversible positive electrode additive.

The lithium nickel-based oxide may be Li₂NiO₂, and the use of Li₂NiO₂ may provide a lot of lithium in the formation process, which may consequently compensate for a lot of irreversible lithium and may, thus, greatly obtain the effect of the irreversible positive electrode additive.

An average particle diameter D₅₀ of the irreversible positive electrode additive is not specifically limited but may be, for example, from about 0.5 µm to about 20 µm, for example, from about 0.5 µm to about 10 µm, from about 0.5 µm to about 5 µm, or from about 0.5 µm to about 3 µm.

### Negative Electrode

A negative electrode for a rechargeable lithium battery includes a negative electrode current collector and a negative electrode active material layer on the negative electrode current collector. The negative electrode active material layer includes a negative electrode active material and may optionally further include a binder, a conductive material, or a combination thereof.

The negative electrode current collector is not particularly limited as long as the negative electrode current collector has conductivity without causing undesirable chemical changes in the rechargeable lithium battery and may be a copper foil having a thickness from about 10 µm to about 15 µm.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be a carbon-based negative electrode active material, for example, crystalline carbon, amorphous carbon, or a combination thereof. The crystalline carbon may be natural graphite or artificial graphite having an irregular, sheet, flake, spherical or fiber geometry. The amorphous carbon may be a soft carbon, a hard carbon, a mesophase pitch carbonization product, or calcined coke.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOx (0<x≤2), a Si-Q alloy (wherein Q is an element selected from an alkali metal, an alkaline earth metal, a Group 13 element, a Group 14 element [excluding Si], a Group 15 element, a Group 16 element, a transition metal, a rare earth element, and a combination thereof and may be, for example, selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. The average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. The silicon-carbon composite may include a secondary particle (core) in which silicon primary particles are assembled and an amorphous carbon coating layer (shell) on a surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon, hard carbon, a mesophase pitch carbonized product, or calcined coke.

When the silicon-carbon composite includes silicon and amorphous carbon, an amount of the silicon may be from about 10 wt% to about 50 wt%, and an amount of the amorphous carbon may be from about 50 wt% to about 90 wt% based on 100 wt% of the silicon-carbon composite. In addition, when the composite includes silicon, amorphous carbon, and crystalline carbon, an amount of silicon may be from about 10 wt% to about 70 wt%, an amount of crystalline carbon may be from about 1 wt% to about 60 wt%, and an amount of amorphous carbon may be from about 15 wt% to about 50 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm or from about 10 nm to about 200 nm. The silicon particles may be present as silicon alone, in the form of a silicon alloy, or in an oxidized form. The oxidized form of the silicon may be represented as SiOₓ (0<x≤2). The atomic ratio of Si:O, which indicates the degree of oxidation, may be from about 99:1 to about 33:67. As used herein, when a definition is not otherwise provided, an average particle diameter D₅₀ indicates a diameter of a particle where a cumulative volume is about 50 vol% in a particle size distribution, wherein the value may be calculated on the assumption that the particles are spherical.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, a mixing ratio may be about 1:99 to about 90:10 by weight.

The negative electrode active material may be included in an amount from about 90 wt% to about 99.8 wt% or from about 94 wt% to about 99 wt%, based on 100 wt% of the negative electrode active material layer.

The binder serves to well adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used unless it causes an undesirable chemical change. Examples of the conductive material include a carbon-based material such as natural graphite, artificial graphite, carbon black, acetylene black, Ketjen black, a carbon fiber, a carbon nanofiber, or a carbon nanotube; a metal-based material of a metal powder or a metal fiber including copper, nickel, or aluminum silver; a conductive polymer such as a polyphenylene derivative; or a mixture thereof.

An amount of the binder may be from about 0.1 wt% to about 5 wt% based on 100 wt% of the negative electrode active material layer, and an amount of the conductive material may be from about 0.1 wt% to about 5 wt% based on 100 wt% of the negative electrode active material layer.

### Electrolyte

An electrolyte for a rechargeable lithium battery is an electrolyte solution and includes a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC). The ester-based solvent may include methyl acetate, ethyl acetate, n-propyl acetate, t-butyl acetate, methyl propionate, ethyl propionate, decanolide, mevalonolactone, valerolactone, or caprolactone. The ether-based solvent may include dibutyl ether, tetraglyme, diglyme, dimethoxyethane, 2-methyltetrahydrofuran, 2,5-dimethyltetrahydrofuran, or tetrahydrofuran. The ketone-based solvent may include cyclohexanone. The alcohol-based solvent may include ethanol or isopropyl alcohol and the aprotic solvent may include nitriles such as R-CN (wherein R is a C2 to C20 linear, branched, or cyclic hydrocarbon group, and may include a double bond, an aromatic ring, or an ether group); amides such as dimethylformamide; dioxolanes such as 1,3-dioxolane or 1,4-dioxolane; or sulfolanes.

The non-aqueous organic solvent may be used alone or in combination with two or more non-aqueous organic solvents, and, when two or more non-aqueous organic solvents are used in combination, the mixing ratio may be appropriately adjusted depending on intended battery performances, which is widely understood by those working in the relevant field.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve cycle-life of the rechargeable lithium battery.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊iSO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity. Thus, excellent performance can be achieved, and lithium ions can move effectively.

### Separator

Depending on the type of rechargeable lithium battery, a separator may exist between the positive and negative electrodes. The separator may include polyethylene, polypropylene, polyvinylidene fluoride, or a multilayer film of two or more layers and may of course be a mixed multilayer film such as a polyethylene/polypropylene two-layer separator, a polyethylene/polypropylene/polyethylene three-layer separator, or a polypropylene/polyethylene/polypropylene three-layer separator.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, polytetrafluoroethylene (e.g., TEFLON^{®}), or a copolymer or mixture of two or more thereof. The porous substrate may include glass fibers, or may comprise a composite membrane of polymer and glass fibers.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles of Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but the inorganic material is not limited thereto. An average particle diameter D₅₀ of the inorganic particles may be from about 1 nm to about 2000 nm, for example, from about 100 nm to about 1000 nm or from about 100 nm to about 700 nm.

The organic material and the inorganic material may be mixed in one coating layer, or a coating layer including an organic material and a coating layer including an inorganic material may be stacked.

A thickness of the coating layer may be from about 0.5 µm to about 20 µm, for example, from about 1 µm to about 10 µm, or from about 1 µm to about 5 µm.

Hereinafter, examples and comparative examples of the present invention are described. However, the examples described below are only some embodiments of the present invention, and the present invention is not limited to the examples described below.

### Example 1

### (1) Preparation of Positive Electrode Active Material

FePO₄ as an iron phosphate-based precursor and Li₂CO₃ as a lithium raw material were mixed in a molar ratio of 2:1 to prepare a raw material mixture. In addition, a carbon raw material was prepared by mixing glucose and polyethylene glycol in a weight ratio of 5:5. Subsequently, 90 wt% of the raw material mixture and 10 wt% of the carbon raw material were mixed and then wet-milled by adding water as a solvent to the mixture of the raw material mixture and the carbon raw material to prepare a slurry. The wet milling was carried out using a ball milling apparatus. Specifically, a mixture of about 90 wt% of the raw material mixture and about 10 wt% of the carbon source material was introduced into a milling container having a capacity of about 5 L, together with about 3 kg of zirconia balls and about 2 kg of water, and the wet milling was performed by rotating the container at a rotational speed of about 100 rpm for about 3 hours. During the wet milling, TiO₂ as a Ti raw material, and the amount was adjusted such that Ti accounted for 0,2 mol% based on a total metal, excluding lithium, in a finally obtained lithium iron phosphate-based compound.

The wet-milled slurry was added to a spray dryer (Büchi Mini Spray Dryer B-290) at 0.5 kg/min and then spray-dried at 200°C to form a dried product, which was fired at 750°C for 8 hours to obtain a fired product. The fired product included the lithium iron phosphate-based compound in the form of secondary particles in which a plurality of primary particles was agglomerated.

The fired product was pulverized at 1500 rpm by using an air jet mill to prepare a positive electrode active material. The positive electrode active material contained the lithium iron phosphate-based compound (LiFe_{0.998}Ti_{0.002}PO₄) in the form of secondary particles in which a plurality of primary particles was agglomerated.

### (2) Manufacturing of Positive Electrode

The positive electrode active material was mixed with polyvinylidene fluoride as a binder and carbon nanotube as a conductive material in a weight ratio of 96:2:2 (positive electrode active material:binder:conductive material) to prepare a positive electrode active material composition. This composition was dispersed in an N-methyl pyrrolidone solvent to prepare a positive electrode slurry, which was coated on a 15-µm-thick Al foil and then dried and compressed to manufacture a positive electrode.

### (3) Manufacturing of Rechargeable Lithium Battery Cell

97.5 wt% of graphite as a negative electrode active material, and 1.5 wt% of carboxymethyl cellulose and 1 wt% of styrene butadiene rubber as a binder were dispersed in distilled water to prepare a negative electrode active material slurry. This slurry was coated on a 10 µm-thick Cu foil and then dried and compressed to manufacture a negative electrode.

A 10-µm-thick polyethylene separator was disposed between the positive electrode and the negative electrode to manufacture an electrode assembly, which was inserted into a case, and an electrolyte was injected into the case to manufacture a rechargeable lithium battery cell (a pouch-type cell of 100 mAh level). The electrolyte was prepared by mixing EC (ethylenecarbonate):EMC (ethylmethylcarbonate):DMC (dimethylcarbonate) in a volume ratio of 2:4:4 and dissolving 1.15 M LiPF₆ in the mixed solvent.

### Examples 2 to 4 and Comparative Examples 1 to 4

Positive electrode active materials, positive electrodes, and rechargeable lithium battery cells according to Examples 2 to 4 and Comparative Examples 1 to 4 were manufactured substantially in the same manner as in Example 1, except that the addition speed of slurry and the temperature during the spray drying, and the pulverization speed of the fired product were changed as shown in Table 1 in '(1) Preparation of Positive Electrode Active Material' of Example 1. In Table 1, the slurry addition speed during the spray drying was based on an amount of the lithium iron phosphate-based compound, which indicates a weight (kg) of the lithium iron phosphate-based compound added per minute.

**Table 1:**

| | Addition speed of slurry during spray drying (kg/min) | Temperature during spray drying (°C) | Pulverization speed of fired product (rpm) |
|---|---|---|---|
| Example 1 | 0.5 | 200 | 1500 |
| Example 2 | 0.5 | 225 | 1500 |
| Example 3 | 0.5 | 250 | 1500 |
| Example 4 | 1 | 200 | 1500 |
| Comparative Example 1 | 1 | 200 | 8000 |
| Comparative Example 2 | 1 | 250 | 8000 |
| Comparative Example 3 | 2 | 200 | 8000 |
| Comparative Example 4 | 2 | 250 | 8000 |

Referring to Table 1, Examples 1 to 4 had the pulverization speed of the fired product adjusted to 2000 rpm or less, and Comparative Examples 1 to 4 had the pulverization speed of the fired product adjusted to 8000 rpm.

### Evaluation Example 1: Evaluation of Positive Electrode Active Material

### (1) Porosity Evaluation

The positive electrode active materials according to Examples 1 to 4 and Comparative Examples 1 to 4 were measured with respect to porosity, and the results are shown in Table 2. The porosity was obtained by using an image analysis program, Image J, to measure a ratio of an area of pores to those of cross-sections of secondary particles in a scanning electron microscope image of the cross-sections of the secondary particles of each of the positive electrode active materials, and the results are shown in Table 2.

### (2) Particle Analysis

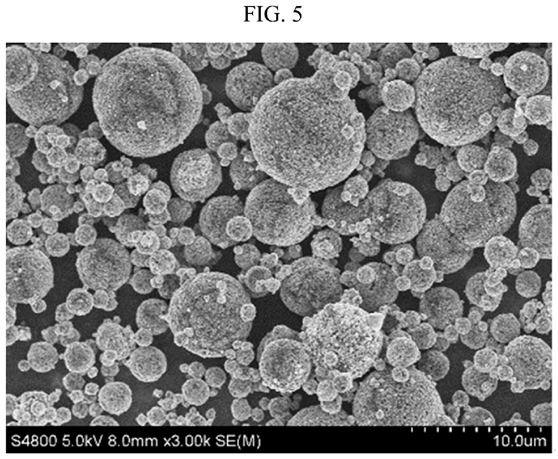

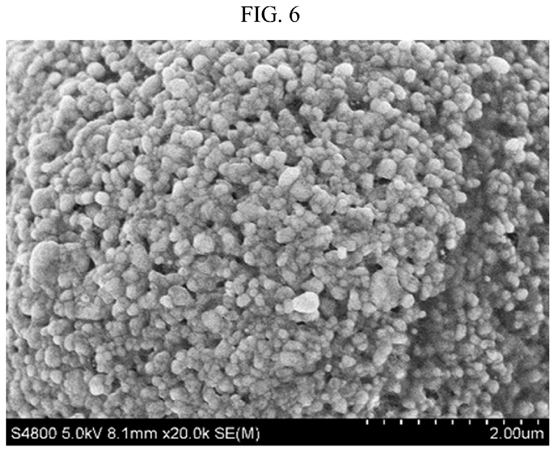

FIGS. 5 and 6 are each a scanning electron microscope image of a surface of a positive electrode active material according to Example 1. The scanning electron microscope images of FIGS. 5 and 6 were taken at a different magnification on the surface of the positive electrode active material of Example 1.

Referring to FIG. 5, the positive electrode active material of Example 1 had a plurality of assemblies in the form of agglomerated secondary particles in which a plurality of primary particles were agglomerated, and, referring to FIG. 6, when the surface of one assembly was enlarged, the primary particles were relatively uniformly present within the one assembly.

Like the positive electrode active material of Example 1, each of the positive electrode active materials of Examples 2 to 4 was taken a scanning electron microscope image on the surface, and referring to the image, an average particle diameter of secondary particles, an arithmetic mean size of secondary particles, a standard deviation of the arithmetic mean size of secondary particles, an arithmetic mean size of primary particles, and a standard deviation of the arithmetic mean size of primary particles were measured, and the results are shown in Table 2.

Specifically, the average particle diameter of secondary particles was obtained by randomly taking 20 secondary particles in the scanning electron microscope image of each of the positive electrode active material, measuring the size of each secondary particle, and calculating an arithmetic mean the size of each secondary particle, wherein the size of each particle is defined as a diameter in the case of a spherical particle, and as a square root of a product of a major axis length and a minor axis length in the case of a non-spherical particle.

The arithmetic mean size of the secondary particles, a standard deviation of the arithmetic mean size of the secondary particles, the arithmetic mean size of the primary particles, and a standard deviation of the arithmetic mean size of the primary particles were respectively obtained by measuring the sizes of 20 randomly selected secondary particles and 20 randomly selected primary particles from a scanning electron microscope (SEM) image, respectively, and calculating an arithmetic mean value and a standard deviation of the arithmetic mean value, wherein the size of each particle is defined as a diameter in the case of a spherical particle, and as a square root of a product of a major axis length and a minor axis length in the case of a non-spherical particle.

The positive electrode active materials of Comparative Examples 1 to 4, could not proceed with the evaluation according to Table 2, because a plurality of primary particles of the positive electrode active materials was in a state of being dispersed, when a fired product in an assembly form was pulverized at 8000 rpm, which is greater than 2000 rpm, as the secondary particles did not maintain the assembly form but were, instead, separated into the plurality of primary particles.

**Table 2:**

| | Porosity (%) | Average particle diameter of secondary particles (µm) | Arithmetic mean size of secondary particles (µm) | Standard deviation of arithmetic mean size of secondary particles (µm) | Arithmetic mean size of primary particles (nm) | Standard deviation of arithmetic mean size of primary particles (nm) |
|---|---|---|---|---|---|---|
| Example 1 | 28.0 | 8 | 8 | 1.95 | 100 | 25.4 |
| Example 2 | 25.5 | 8 | 8 | 1.98 | 100 | 26.3 |
| Example 3 | 24.8 | 8 | 8 | 1.91 | 100 | 24.7 |
| Example 4 | 26.9 | 8 | 8 | 2.02 | 100 | 25.3 |

Referring to Table 2, the positive electrode active materials of Examples 1 to 4, in which the pulverization speed was adjusted to 2000 rpm or less, were confirmed to have secondary particles that were uniformly formed and to have primary particles that were uniformly formed.

### (3) Pellet Density Evaluation

The positive electrode active materials of Examples 1 to 4 and Comparative Examples 1 to 4 were measured with respect to pellet density, and the results are shown in Table 3. The pellet density was determined by placing 3 g of each of the positive electrode active materials in a mold, maintaining each of the positive electrode active materials in the mold at 4 tons for 30 seconds at a temperature of 25°C, measuring a thickness of the pellet, calculating the pellet volume using the thickness of the pellet and the diameter of the mold, and dividing the mass of the positive electrode active material by the calculated volume.

### (4) Measurement of Amount of Carbon

The positive electrode active materials of Examples 1 to 4 and Comparative Examples 1 to 4 were measured with respect to an amount of carbon, and the contents are shown in Table 3. Specifically, the amount of carbon was analyzed by completely combusting each of the positive electrode active materials at a high temperature from 1200°C to 1400°C under an oxygen atmosphere to convert carbon and sulfur in the positive electrode active material to CO₂ (or CO) and SO₂. In Table 3, the amount of carbon was based on 100 wt% of each of the positive electrode active materials. The following amount of carbon was equivalent to a carbon coating amount based on 100 wt% of the positive electrode active material.

### (5) Colorimetric Parameter Evaluation

The positive electrode active materials of Examples 1 to 4 and Comparative Examples 1 to 4 were evaluated with respect to colorimetric parameters such as L, R, G, and B by measuring L, a, and b values through color coordinates in a CIE LAB color space by using a colorimeter and then processing them through a 'SpectraMagic' program. The colorimetric parameters of the positive electrode active materials may be measured in a powder state and based on a white point corresponding to a D65 illuminant in a DCI-P3 color space, and the results are shown in Table 3.

**Table 3:**

| | Pellet density (g/cc) | Amount of Carbon (wt%) | Colorimetric parameter | | | |
|---|---|---|---|---|---|---|
| | | | L value | R value | G value | L value |
| Ex. 1 | 2.43 | 1.82 | 26.9 | 64.1 | 61.2 | 53.7 |
| Ex. 2 | 2.46 | 1.81 | 25.3 | 62.8 | 59.4 | 55.3 |
| Ex. 3 | 2.46 | 1.81 | 23.4 | 60.2 | 57.4 | 57.8 |
| Ex. 4 | 2.35 | 1.79 | 24.6 | 56.9 | 57.6 | 57.3 |
| Comp. Ex. 1 | 2.4 | 1.54 | 34.2 | 80.9 | 80.5 | 78.1 |
| Comp. Ex. 2 | 2.39 | 1.58 | 34.5 | 82.1 | 81 | 78.5 |
| Comp. Ex. 3 | 2.43 | 1.48 | 35.1 | 81.9 | 80.7 | 78.2 |
| Comp. Ex. 4 | 2.42 | 1.53 | 34.5 | 81.5 | 80.9 | 78.9 |

Referring to Table 3, Examples 1 to 4, in which the pulverization speed of a fired product was adjusted to 2000 rpm or less, exhibited equivalent or excellent pellet density to Comparative Examples 1 to 4, but, despite using the same amount of the carbon raw material in Examples 1 to 4 and Comparative Examples 1 to 4, Examples 1 to 4 were confirmed to exhibit a significantly greater amount of carbon than Comparative Examples 1 to 4. This suggests that, when the pulverization speed of a fired product was excessively high, an assembly form of secondary particles did not maintain the assembly form but was separated into nanoparticles. Carbon was not effectively adhered onto the positive electrode active material surface but partially detached or lost during the pulverization process, thereby substantially lowering the measured amount. However, when the pulverization speed was within an appropriate range of 2000 rpm or less, the positive electrode active material well maintained the assembly form, so that carbon was not detached but was, instead, stably fixed on the surface of and inside the positive electrode active material and effectively remained even after the pulverizing process. In addition, Examples 1 to 4, in which the pulverization speed of a fired product was adjusted to 2000 rpm or less, exhibited the colorimetric parameters of L of 30 or less, R of 70 or less, G of 70 or less, and B of 70 or less, but Comparative Examples 1 to 4, in which the pulverization speed of a fired product was adjusted to greater than 2000 rpm, exhibited the values that did not satisfy the same ranges above.

### Evaluation Example 2: Measurement Viscosity of Positive electrode slurry

The viscosity of the positive electrode slurries respectively including the positive electrode active materials according to Examples 1 to 4 and Comparative Examples 1 to 4 was measured at 25°C using a Brookfield rotational viscometer at 20 rpm with a sample amount of 3 g, and the results are shown in Table 4.

### Evaluation Example 3: Evaluation of Battery Performance

### (1) Evaluation of Initial Charge/discharge Capacity and Efficiency

The rechargeable lithium battery cells of Examples 1 to 4 and Comparative Examples 1 to 4 were charged to 3.8 V at a 0.2 C-rate and then discharged to a cut-off voltage of 3.0 V at the 0.2 C-rate at 25°C to measure initial charge/discharge capacity, which was used to calculate initial efficiency according to Equation 1. The results are shown in Table 4. [Equation 1] 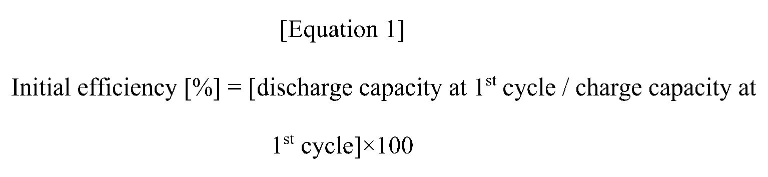 Initial efficiency [%] = [discharge capacity at 1st cycle / charge capacity at 1st cycle] × 100

### (2) Low-temperature Capacity Evaluation

The rechargeable lithium battery cells of Examples 1 to 4 and Comparative Example 1 to 4 were fully charged to a battery voltage of 3.8 V at the 0.2 C-rate and then discharged to 3.0 V at the 0.2 C-rate under an atmosphere set at -20°C in a thermostat to measure low-temperature discharge capacity. The results are shown in Table 4.

### (3) Cycle-life Characteristics Evaluation

The rechargeable lithium battery cells of Examples 1 to 4 and Comparative Examples 1 to 4 were 50 times or more repeatedly charged to the battery voltage of 3.8 V at a 1.0 C-rate and discharged to a cut-off voltage of 3.0 V at the 1.0 C-rate after the initial charge and discharge to calculate a ratio of 50^{th} cycle discharge capacity to the initial discharge capacity according to Equation 2, and the results are shown in Table 4. [Equation 2] 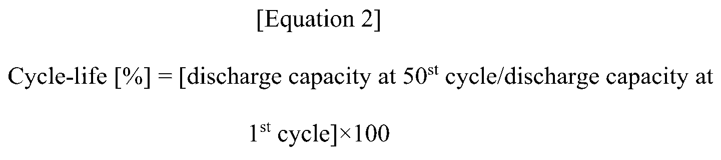 Cycle-life [%] = [discharge capacity at 50st cycle/discharge capacity at 1st cycle] ×100

**Table 4:**

| | Viscosity of positive electrode slurry (mPa·s) | Battery performance evaluation Initial charge capacity (mAh/g) | Initial discharge capacity (mAh/g) | Efficiency (%) | Low-temperature (-20°C) discharge capacity (mAh/g) | Cycle-life (%, @ 50cy) |
|---|---|---|---|---|---|---|
| Example 1 | 4500 | 166.2 | 165 | 99.3 | 97 | 99.5 |
| Example 2 | 3500 | 167.2 | 166.4 | 99.5 | 100 | 99.8 |
| Example 3 | 4000 | 165.5 | 164.2 | 99.2 | 95 | 99.6 |
| Example 4 | 6000 | 165.7 | 159.5 | 96.3 | 92 | 99 |
| Comparative Example 1 | 10200 | 163.8 | 155.8 | 95.1 | 55 | 97.5 |
| Comparative Example 2 | 8500 | 164.1 | 159.7 | 97.3 | 57 | 98.5 |
| Comparative Example 3 | 8500 | 163.5 | 155 | 94.8 | 56 | 96.9 |
| Comparative Example 4 | 9300 | 163.4 | 156.2 | 95.6 | 58 | 97.1 |

Referring to Table 4, the positive electrode slurries respectively including the positive electrode active materials of Examples 1 to 4 (which all satisfied the colorimetri c parameters of L of 30 or less, R of 70 or less, G of 70 or less, and B of 70 or less) satisfied viscosity of 8000 mPa·s or less and, thus, exhibited easy coating and improved process stability and consistency, but Comparative Examples 1 to 4 (which did not satisfy the colorimetric parameters of L, R, G, and B) exhibited viscosity of greater than 8000 mPa·s and, thus, did not exhibit easy coating and exhibited deteriorated process stability and consistency. In addition, the rechargeable lithium battery cells respectively prepared by using the positive electrode slurries including the positive electrode active materials of Examples 1 to 4 (which satisfied the colorimetric parameters of L of 30 or less, R of 70 or less, G of 70 or less, and B of 70 or less) exhibited excellent initial charge and discharge efficiency, low-temperature discharge capacity, and cycle-life characteristics, as opposed to those including the positive electrode active materials of Comparative Examples 1 to 4. In particular, the rechargeable lithium battery cells of Examples 1 to 4 satisfied a low-temperature discharge capacity of 90 mAh/g or more, which was a significantly excellent low-temperature discharge capacity. This suggests that the rechargeable lithium battery cells including the positive electrode active materials of Examples 1 to 4 (having an assembly form in the form of secondary particles in which a plurality of primary particles were agglomerated) exhibited interconnectedness between particles, thereby continuously forming conductive paths and, thus, making movement of electrons and lithium ions smooth and exhibiting excellent discharge characteristics in low-temperature environments. However, the rechargeable lithium battery cells including the positive electrode active materials of Comparative Examples 1 to 4, which were separated into nanoparticles, had relatively large contact resistance between particles and were prone to disrupting the conductive pathways, resulting in rapidly deteriorating discharge efficiency under low-temperature conditions.

### Conclusion

The positive electrode active materials of Examples 1 to 4, in which the pulverizing condition of a fired product was adjusted to 2000 rpm or less, as shown in Table 1, were confirmed to have an assembly form in the form of secondary particles in which a plurality of primary particles were agglomerated, and the secondary particles were relatively uniformly formed. A positive electrode active material having such an assembly form satisfied the conditions of L of 30 or less, R of 70 or less, G of 70 or less, and B of 70 or less when measured with a colorimeter, but the positive electrode active materials of Comparative Example 1 to 4, to which the same carbon raw material was added, exhibited a much less of carbon coating amount.

In addition, the positive electrode active materials of Examples 1 to 4 maintained an assembly structure, which led to charging primary particles constituting the assembly structure into pores of the assembly structure during a subsequent compression of the positive electrode during their respective electrode plate manufacturing processes, increasing pellet density and controlling slurry viscosity within an appropriate range and thereby, resulting in excellent processibility. The structural characteristics were confirmed to lead to improving overall electrochemical performance such as initial charge/discharge capacity, efficiency, low-temperature discharge capacity, and cycle-life characteristics of the rechargeable lithium battery.

Meanwhile, the positive electrode active materials of Comparative Examples 1 to 4, in which the pulverization speed of a fired product was adjusted to greater than 2000 rpm, did not maintain the assembly form of the secondary particle structure but, rather, dispersed the secondary particles into nanoparticles. Accordingly, the colorimetric parameters were not satisfactory, and the amount of carbon was less than those of Examples 1 to 4. As a result, the comparative examples exhibited inferior overall performance such as initial charge/discharge capacity, efficiency, low-temperature discharge capacity, and cycle-life characteristics when compared to Examples 1 to 4, and, in particular, the comparative examples exhibited significantly deteriorated low-temperature discharge capacity.

While this invention has been described in connection with what is presently considered to be some embodiments, the present disclosure is not limited to the above-described embodiments. Rather, the present disclosure covers various modifications and equivalent arrangements of the above-described embodiments.

### <Description of Representative Reference Numerals>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A positive electrode active material having a form of secondary particles in which a plurality of primary particles is agglomerated, the positive electrode active material comprising a lithium iron phosphate-based compound,
wherein the positive electrode active material has an L value of less than or equal to 30, an R value of less than or equal to 70, a G value of less than or equal to 70, and a B value of less than or equal to 70 measured by a colorimeter.

2. The positive electrode active material as claimed in claim 1, wherein the L value ranges from 2 to 30, the R value ranges from 20 to 70, the G value ranges from 45 to 70, and the B value ranges from 30 to 70.

3. The positive electrode active material as claimed in claim 1 or claim 2, wherein the lithium iron phosphate-based compound comprises a compound represented by Chemical Formula 1, a compound represented by Chemical Formula 2, or a combination thereof:
[Chemical Formula 1] Liₐ₁Fe(₁-xi)M¹ₓ₁PO₄,
where 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof; and
[Chemical Formula 2] Liₐ₂Mnₓ₂Fe_{(1-x2-y2})M²_{y2}PO₄,
where 0.9≤a2≤1.5, 0.1≤x2≤0.9, 0≤y2<0.9, and x2+y2<1, and M² is Al, Ca, Ce, Cr, Cu, La, Mg, Mo, Nb, Ni, Sn, Sr, Ti, V, W, Y, Zn, Zr, or a combination thereof.

4. The positive electrode active material as claimed in any one of claims 1 to 3, wherein
(a) the lithium iron phosphate-based compound comprises Al, Mg, Ti, V, or a combination thereof in an amount from 0.1 mol% to 0.5 mol% based on a total metal in the lithium iron phosphate-based compound, excluding lithium,
and/or
(b) an average particle diameter of the secondary particles is from 3 µm to 20 µm.

5. The positive electrode active material as claimed in any one of claims 1 to 4, wherein an arithmetic mean size of the secondary particles is from 3 µm to 20 µm, and
wherein a standard deviation of the arithmetic mean size of the secondary particles is less than or equal to 2.1 µm.

6. The positive electrode active material as claimed in any one of claims 1 to 5 , wherein an arithmetic mean size of the primary particles constituting the secondary particles is less than or equal to 200 nm, and
wherein a standard deviation of the arithmetic mean size of the primary particles is less than or equal to 100 nm.

7. The positive electrode active material as claimed in any one of claims 1 to 6, wherein the secondary particles comprise pores, and a porosity, which is a ratio of an area occupied by pores in a cross-section of the secondary particles to a cross-sectional area of the secondary particles, is from 10% to 50%.

8. The positive electrode active material as claimed in any one of claims 1 to 7, wherein
(a) the positive electrode active material further comprises a carbon coating layer on surfaces of the secondary particles, and
wherein an amount of the carbon coating layer in the positive electrode active material is from 1.55 wt% to 2 wt% based on 100 wt% of the positive electrode active material,
and/or
(b) a pellet density of the positive electrode active material is from 2.35 g/cc to 2.5 g/cc.

9. A method of preparing a positive electrode active material, the method comprising:
mixing an iron phosphate-based precursor, a lithium raw material, and a carbon raw material in a solvent and wet milling the iron phosphate-based precursor, the lithium raw material, and the carbon raw material to prepare a slurry;
adding the slurry to a spray dryer and spray drying the slurry to prepare a dried product;
firing the dried product to prepare a fired product; and
pulverizing the fired product to obtain a positive electrode active material.

10. The method as claimed in claim 9, wherein adding the slurry to the spray dryer comprises adding the slurry to the spray dryer at an addition speed of less than or equal to 1 kg/min.

11. The method as claimed in claim 9 or claim 10, wherein spray drying the slurry to prepare the dried product comprises spray drying the slurry at a temperature from 150°C to 400°C.

12. The method as claimed in any one of claims 9 to 11, wherein pulverizing the fired product to obtain the positive electrode active material comprises pulverizing the fired product at a pulverization speed of less than or equal to 2000 rpm.

13. The method as claimed in any one of claims 9 to 12, wherein the obtained positive electrode active material is in a form of secondary particles in which a plurality of primary particles is agglomerated, the obtained positive electrode active material comprises a lithium iron phosphate-based compound, and the obtained positive electrode active material has an L value of less than or equal to 30, an R value of less than or equal to 70, a G value of less than or equal to 70, and a B value of less than or equal to 70 measured by a colorimeter.

14. A positive electrode slurry comprising: the positive electrode active material as claimed in any one of claims 1 to 8; and
a solvent,
wherein the positive electrode slurry has a viscosity of less than or equal to 8000 mPa·s.

15. A rechargeable lithium battery comprising:
a positive electrode comprising:
a positive electrode current collector; and
a positive electrode active material layer being disposed on the positive electrode current collector and comprising the positive electrode active material as claimed in any one of claims 1 to 8;
a negative electrode; and
an electrolyte.
